Europäisches Patentamt

European Patent Office

Office européen des brevets

(19)

(11) Publication number: **0 295 723 B1**

(12) **EUROPEAN PATENT SPECIFICATION**

(45) Date of publication of patent specification: **19.11.92**    (51) Int. Cl.5: **A21B 7/00**

(21) Application number: **88110801.3**

(22) Date of filing: **06.07.84**

(60) Publication number of the earlier application in accordance with Art.76 EPC: **0 131 264**

(54) **Kneading means for bread baking machine.**

(30) Priority: **08.07.83 JP 125251/83**
**02.12.83 JP 185758/83**

(43) Date of publication of application:
**21.12.88 Bulletin 88/51**

(45) Publication of the grant of the patent:
**19.11.92 Bulletin 92/47**

(84) Designated Contracting States:
**DE FR GB**

(56) References cited:
**WO-A-83/00800**
**FR-A- 2 088 710**
**US-A- 1 967 933**
**US-A- 4 189 992**

**SIEMENS publication 0466(55014) HO 6421/6420 dated April 81: "Instructions for use" of a cooking plate and of an automatic switchboard.**

(73) Proprietor: **HOSIDEN CORPORATION**
**4-33, Kitakyuhoji 1-chome**
**Yao-shi Osaka(JP)**

(72) Inventor: **Ojima, Shin**
**1116-32, Hattorigawa**
**Yao-shi Osaka(JP)**
Inventor: **Kamiuchi, Hideaki**
**1-77-19, Amamihigashi**
**Matsubara-shi Osaka(JP)**
Inventor: **Mine, Keiji**
**4-66,Midorigaoka, Yao-shi**
**Osaka(JP)**

(74) Representative: **Blumbach Weser Bergen**
**Kramer Zwirner Hoffmann Patentanwälte**
**Radeckestrasse 43**
**W-8000 München 60(DE)**

Rank Xerox (UK) Business Services

EP 0 295 723 B1

## Description

BACKGROUND OF THE INVENTION

The present invention relates to an automatic bread baking machine for domestic use and, more particularly, kneading means included therein.

The bread baking procedure starts with the kneading of ingredients of bread, such as wheat flour, yeast and small amounts of butter and sugar, with water in a kneader. The kneading of the ingredients of bread or dough has an important influence on the quality of bread and appropriate kneading is requisite for good bread. As the kneading of the ingredients progresses, the dough temperature gradually rises; it is said that the dough temperature in the range of 27 to 29°C is the best for the production of gluten in the dough to make it lustrous. Such good dough could not be obtained simply by controlling the kneading process in terms of time alone, because the dough temperature varies under the influence of ambient temperature. Moreover, the dough after being kneaded must be repeatedly fermented and degassed prior to baking. Therefore, in the case of a so-called preset type bread baking machine in which a time is used to preset the time when the bread is desired to be baked, it is troublesome to calculate the time when to start the kneading.

The document WO-A-8300800 discloses an automatic bread-baking machine having a controller for controlling first fermentation, valve vent, agitation, second fermentation, valve vent, agitation, rest, baking and valve vent. The controller includes a slide switch rotating at a constant angular speed to slide along contact segments, thus determining the time of the above steps successively carried out.

The document FR-A-2088710 discloses a kneading machine having a dough container provided with a temperature sensor capable of sensing the temperature of the kneaded dough, the temperature sensor being disposed in the vicinity of a portion of the container against which the dough is urged during kneading.

The SIEMENS publication n° 466 (55014) dated April 1981 illustrates a cooking plate and the relevant automatic switch-board which allows to preset directly the finish time on the basis of a given time which is required as the cooking duration.

SUMMARY OF THE INVENTION

It is an object of the present invention to provide an automatic bread baking machine including kneading means which allows the kneading to be automatically started at a suitable time such that the bread is baked at a desired preset time.

This object is achieved with an automatic bread baking machine as claimed.

Fig. 1 is a sectional view illustrating an embodiment of the automatic bread baking machine of the present invention;

Fig. 2 is a perspective view illustrating the general arrangement of the automatic bread baking machine of Fig. 1, with a top housing member 13 open;

Fig. 3 is a sectional view illustrating an example of a structure for mounting a container 16;

Fig. 4 is a perspective view showing a rotary vane 19;

Fig. 5 is a schematic diagram showing how dough is kneaded by the rotary vane and a fixed rod;

Fig. 6 is a front view showing an example of a control panel 52;

Fig. 7 is a block diagram illustrating an example of a controller 53 which is formed by a microcomputer, and its input/output relation;

Figs. 8A and 8B are a flowchart showing an example of processing control by the controller 53;

Figs. 9A, B and C are timing charts showing, by way of example, control of temperature of a heater, control of a motor for the rotary vane and control of a motor for a pump in the operation of the bread baking machine of the present invention;

Fig. 10 is a diagram showing, by way of example, various areas of a RAM 106 in the microcomputer;

Fig. 11 is a diagram showing the relationships of the kinds and amounts of bread to the time and temperature in each step;

General Arrangement

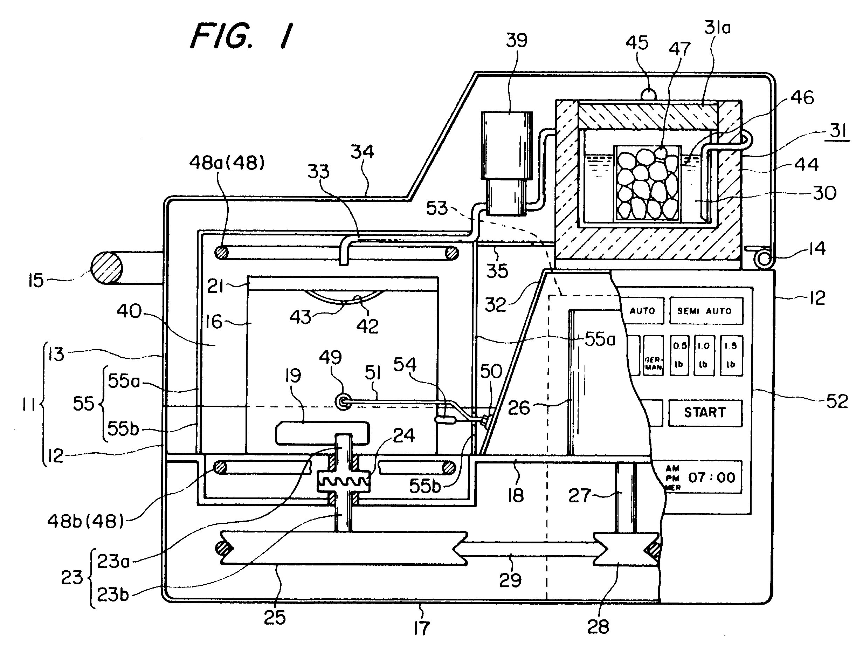

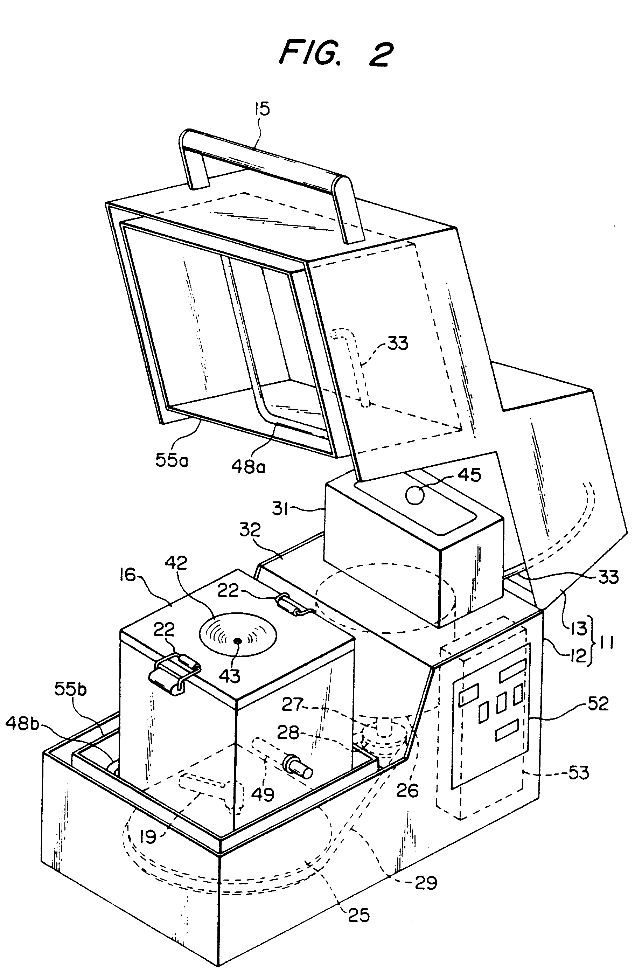

Figs. 1 and 2 illustrate an embodiment of the automatic bread baking machine of the present invention. A housing 11 of the bread baking machine is substantially rectangular parallelepipedic in shape, and its right half portion in Fig. 1 is formed taller than the left half portion. The housing 11 is comprised of bottom and top housing members 12 and 13. The top housing member 13 is pivotally connected at the marginal edge of its taller right portion to the bottom housing member 12 by means of a hinge 14, and hence can be turned about it to cover or uncover the bottom housing member 12. A knob 15 for handling the top housing member 13 is mounted on its side panel opposite from the hinge 14. A container 16 is removably mounted in the housing 11. The housing 11 has fixedly secured thereto a base plate 18 substantially in parallel to its bottom panel 17 in the vicinity thereof, and the container 16 is detachably mounted on the base plate 18 in the bottom housing member 12 on the left-hand side in Fig. 1. A description will be given later of means for mounting the container 16 on the base plate 18.

A rotary vane 19 is rotatably mounted on the bottom of the container 16 and is driven to knead the ingredients of bread and water in the container 16, obtaining dough. The container 16 is substantially rectangular parallelepipedic in shape and its top panel is used as a lid 21, which can be fixedly held on the container 16 by fixing means 22 attached to upper marginal portions of a pair of opposed side panels of the container 16. A rotary shaft 23 is passed through the bottom panel of the container 16 centrally thereof. The rotary shaft 23 is comprised of an upper shaft 23a which is rotatably supported by the bottom panel of the container 16 and a lower shaft 23b which is rotatably supported by the base plate 18. The upper and lower shafts 23a and 23b are coupled together by a clutch 24. The upper end of the upper shaft 23a carries the rotary vane 19. A pulley 25 is mounted on the lower end of the lower shaft 23b under the base plate 18. A motor 26 is mounted on the base plate 18 in the housing 11 on the side of the hinge 14. A rotary shaft 27 of the motor 26 projects out of the base plate 18 downwardly thereof and carries at its projecting end a pulley 28, which is connected by a belt 29 to the pulley 25. Thus the rotary vane 19 can be driven by the motor 26.

A water tank 31 is mounted in the housing 11 for supplying water 30 from the tank 31 into the container 16. In this example, a base plate 32 is fixed to the base plate 18 and the water tank 31 is mounted on the base plate 32. The water tank 31 is disposed higher than the container 16. One end portion of a pipe 33 is inserted into a small hole made in a side wall of the water tank 31 and the inserted end of the pipe 33 is disposed at the bottom of the water tank 31. The pipe 33 is led out of the water tank 31 on the side of the hinge 14 and directed around the water tank 31 to a position just above the container 16. The other end of the pipe 33 is held on the top housing member 13 so that it faces downward in opposing relation to the central portion of the lid 21 of the container when the top housing member 13 lies on the bottom housing member 12 to cover it.

A pump 39 is connected to the intermediate portion of the pipe 33. The pump 39 is mounted on the top housing member 13. By driving the motor 41, the water 30 in the water tank 31 is supplied via the pipe 33 to the container 16. The lid 21 of the container 16 has a centrally disposed shallow circular recess 42 which is arcuate in section, and a small hole is made in the lid 21 at the center of the circular recess 42. Accordingly, the water from the pipe 33 is supplied into the recess 42, from which it drops into the container 16 through the small hole 43. The water tank 31 is covered with a heat-insulating layer 44. A top panel of the water tank 31 is used as a lid 31a, which has a knob 45. An ice box 46 is disposed in the water tank 31 for containing therein ice 47 by which the temperature of the water 30 in the water tank 31 can be held low, as required.

A heater 48 is provided for heating the container 16. The heater 48 is comprised of a top heater 48a and a bottom heater 48b. The top heater 48a is a square ring-shaped heater which is held in the top housing member 13 so that it lies slightly above the lid 21 of the container 16 substantially in parallel thereto when the top housing member 13 is placed in position covering the bottom housing member 12. The bottom heater 48b is also a square ring-shaped heater disposed slightly below the bottom panel of the container substantially in parallel thereto. Each side of the heaters 48a and 48b is larger than each side of the top panel of the container 16.

In the container 16 a fixed rod is disposed to extend above the circle of rotation of the rotary vane 19 in the radial direction thereof. In this example, the fixed rod 49 is attached to one of the side panels of the container 16. The fixed rod 49 has incorporated therein a temperature sensor, though not shown, and its lead 51 is led out of the container 16. The lead 51 is detachably connected by a connector 50 to the mating connector disposed, for example, on the vertical portion of the base plate 32.

A control panel 52 is provided on the front of the housing 11 at one side thereof, and a controller 53 is disposed behind the control panel 52. In response to the condition entered from the control panel 52 the controller 53 activates the pump 41 to supply the water 30 from the water tank 31 into the container 16 and, at the same time, activates the motor 26 to drive the rotary vane 19, starting a kneading step. The ingredients of bread are repeatedly twisted around the fixed rod 49 by the rotation of the rotary vane 19; namely, the ingredients are kneaded into dough. When the temperature sensor built in the fixed rod 49 indicates a predetermined value, the controller 53 decides that the dough temperature has risen up to a predetermined value, and brings the kneading step to an end, which is followed by a fermentation step. Degassing in the fermentation step is carried out by driving the rotary vane 19 for a short period of time.

Upon completion of fermentation for shaping in the fermentation step, the heater 48 is turned ON to start a baking step. By baking at a predetermined temperature over a predetermined period of time, bread is baked in the container 16. A temperature sensor 54 is disposed near the container 16 for the purpose of temperature control during baking.

The container 16 can be made double-walled, as required, by providing an inner panel 55 inside the housing 11. The inner panel 55 is also comprised of top and bottom inner panels 55a and 55b corresponding to the top and bottom housing members 13 and 12, respectively. The top and bottom inner panels 55a and 55b are formed to extend to the side of the base plate 32, too. In the housing 11 the inner panel 55 and the base plate 18 surround and isolate the container 16 and the heater 48, defining a heating chamber 40. The temperature sensor 54 is used to detect the temperature in the heating chamber 40.

Specific Example of Structure for Mounting Container 16

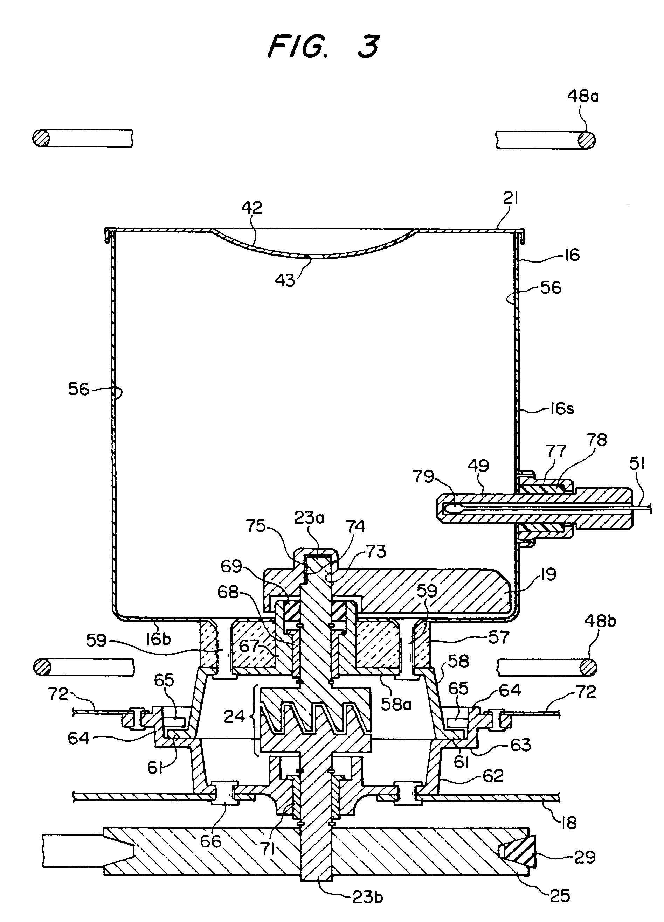

Next, a description will be given, with reference to Fig. 3, of the mounting of the container 16 on the base plate 18, the rotary vane 19 and the fixed rod 49 and so forth. In Fig. 3 the parts corresponding to those in Fig. 1 are identified by the same reference numerals. The container 16 is made of, for instance, aluminum, and its inner surface is coated with a heatproof film 56 as of tetrafluoroethylene so that baked bread can easily be taken out of the container 16 without adhering to its interior surface. A mount 58 is fixedly secured to the underside of the bottom panel 16b of the container 16 through a heat-insulating layer 57. The heat-insulating layer 57 is made of a material of low thermal conductivity, which prevents the transmission of heat, such as tetrafluoroethylene or silicone rubber. The mount 58 is made by, for example, die-casting of metal into the form of a truncated cone. A top panel 58a of the mount 58, the bottom panel 16b of the container 16 and the heat-insulating layer 57 sandwiched therebetween are staked by means of rivets 59. The mount 58 has an edge flange 61 extending from the periphery of its lower end, and the flange 61 has formed therein a plurality of radial cuts at equiangular intervals, though not shown.

On the other hand, a shallow, bottomed cylindrical cradle 62 made as by die-casting of metal is mounted on the base plate 18. The cradle 62 has an annular flange 63 extending from the periphery of its upper end for receiving the flange 61 of the mount 58 and a ring-shaped limit plate 64 raised about the periphery of the flange 63 for limiting lateral movement of the flange 61 of the mount 58. At least two pins 65 project out inwardly of the limit plate 64 to extend just above or in contact with the flange 61 rested on the annular flange 63, limiting vertical movement of the mount 58. Since the flange 61 has radial cuts as mentioned above, the mount 58 can be disassembled from the cradle 62 by turning the mount 58 to bring its radial cuts into opposing relation to the pins 65. The cradle 62 has its bottom panel staked by rivets 66 to the base plate 18.

The top panel of the mount 58 has a centrally disposed aperture, around which a cylindrical portion 67 is formed to extend upwardly of the top panel. The cylindrical portion 67 passes through through holes made in the bottom panel 16b of the container 16 and the heat-insulating layer 57 and slightly extends into the container 16. An oilless bearing 68 is fixedly disposed in the cylindrical portion 67, and the upper shaft 23a of the rotary shaft 23 is inserted through and rotatably held by the oilless bearing 68. A seal 69 as of silicone rubber is closely packed between the upper shaft 23a and the cylindrical portion 67 to prevent water from leaking out from between them. The lower end of the upper shaft 23a has the one half portion of the clutch 24. An oilless bearing 71 is fitted into a central hole made in the bottom panel of the cradle 62, and the lower shaft 23b of the rotary shaft 23 is rotatably held by the bearing 71. The upper end of the lower shaft 23b has the other half portion of the clutch 24. A cover 72 may also be provided near the top surface of the cradle 62 to extend in parallel to the base plate 18, as required.

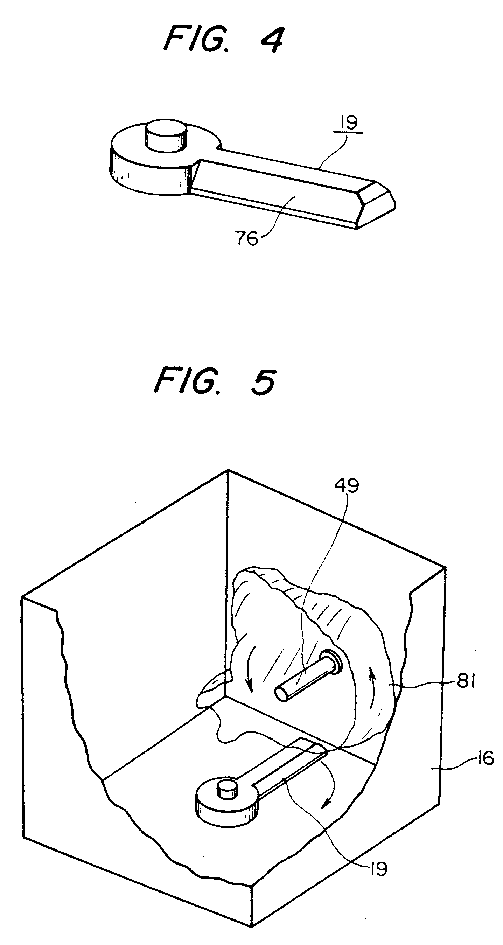

The rotary vane 19 is detachably mounted on the rotary shaft 23 inserted into the container 16. The rotary vane 19 has a coupling hole 73 made in the bottom of its one end portion. The coupling hole 73 is substantially columnar but a portion of its inner peripheral surface is made flat, as indicated by 74. The peripheral surface of the end portion of the rotary shaft 23 is partly cut off to form a coupling face 75. The end portion of the rotary shaft 23 is inserted into the coupling hole 73, with the coupling face 75 of the former held in contact with the flat portion 74 of the latter, by which the rotary vane 19 is mounted on the rotary shaft 23. The rotary vane 19 rotates with the rotation of the rotary shaft 23. By lifting up the rotary vane 19, it can be disassembled from the rotary shaft 23. The rotary vane 19 extends substantially at right angles to the rotary shaft 23 and in adjacent but spaced relation to the bottom panel 16b of the container 16. The length of the rotary vane 19 from the rotary shaft 23 is a little smaller than a half the length of one side of the bottom panel 16b. As shown in Fig. 5, the portion of the rotary vane 19 for receiving the rotary shaft 23 is expanded in a circular form, and as shown in Figs. 3 and 4, a recess is formed in the bottom of the circular portion for receiving the cylindrical portion 67 inserted into the container 16. The face of the rotary vane 19 in the direction of its rotation is inclined, for example, about 60° to the bottom thereof, as indicated by 76. It is preferable that the rotary vane 19 be made of, for instance, aluminum, and coated with a film as of tetrafluoroethylene so as to facilitate releasing of bread from the rotary vane 19.

As shown in Fig. 3, a hole is made in the lower portion of one side panel 16s of the container 16 and a tubular holder 77 made of a metallic material is mounted on the outside of the side panel 16s in alignment with the hole. A hold ring 78 of a heatproof resinous material such as tetrafluoroethylene is fixedly mounted on the inner peripheral surface of the holder 77. The fixed rod 49 is inserted into the hold ring 78 from the outside of the side panel 16s and thus detachably mounted on the container 16. The fixed rod 49 is disposed above the circle of rotation of the rotary vane 19 relatively close thereto. The circle of rotation and the fixed rod 49 are spaced, for example, about 1.5 cm, in the case of baking a pound of bread. The fixed rod 49 extends in the radial direction of the abovesaid circle of rotation, and the length of the fixed rod 49 extending into the container 16 is approximately 1/4 to 1/6 of one side of the bottom panel 16b of the container 16. The fixed rod 49 may preferably be made of, for instance, aluminum, and coated over the entire area of its outer peripheral surface with a releasing film as of tetrafluoroethylene so as to prevent bread from adhering thereto. The fixed rod 49 has formed therein a thin bore to extend from its outer end face to its inner end. A temperature sensor 79, for example, a negative temperature sensing resistance element, is disposed in the bore at the inner end thereof, and a lead 51 connected to the temperature sensor 79 is led out of the container 16. As the heaters 48a and 48b, nichrome wires are used, for instance.

Controller

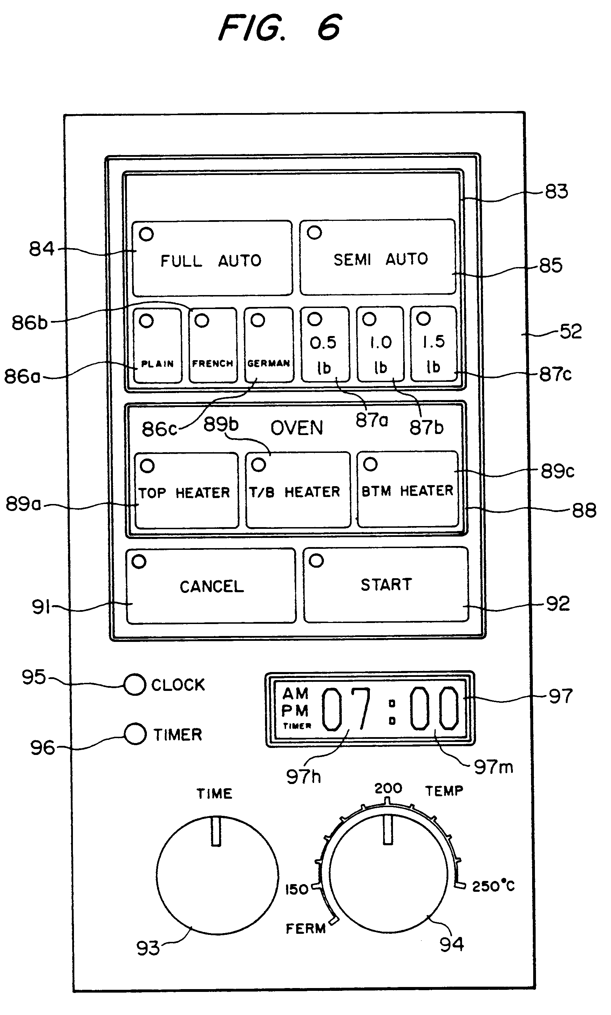

Next, a description will be given of parts related to control. Fig. 6 illustrates an example of the control panel 52 shown in Fig. 1. In a bread setting section 83 there are provided a full automatic key 84, a semi-automatic key 85, such bread setting keys as plain, French and German bread keys 86a, 86b and 86c and such quantity setting keys as 0.5, 1.0 and 1.5 pounds keys 87a, 87b and 87c. This example is designed so that it can also be used as an oven for cooking; therefore, top, top/bottom and bottom heater keys 89a, 89b and 89c are provided in an oven setting section 88. Further, cancel and start keys 91 and 92 are also provided. In this example, membrane switches are used for key inputting, and there are provided, under films indicating the abovesaid keys, flat, plate-shaped switches which are each activated when the overlying film is depressed. It is also possible to substitute the membrane switches with pushbutton switches, in which case their pushbuttons are used in place of the abovesaid keys. On the control panel 52 there are further provided a time setting knob 93, a temperature selecting knob 94, a clock setting knob 95, a timer knob 96 and a time display 97, such, for example, as a liquid crystal display.

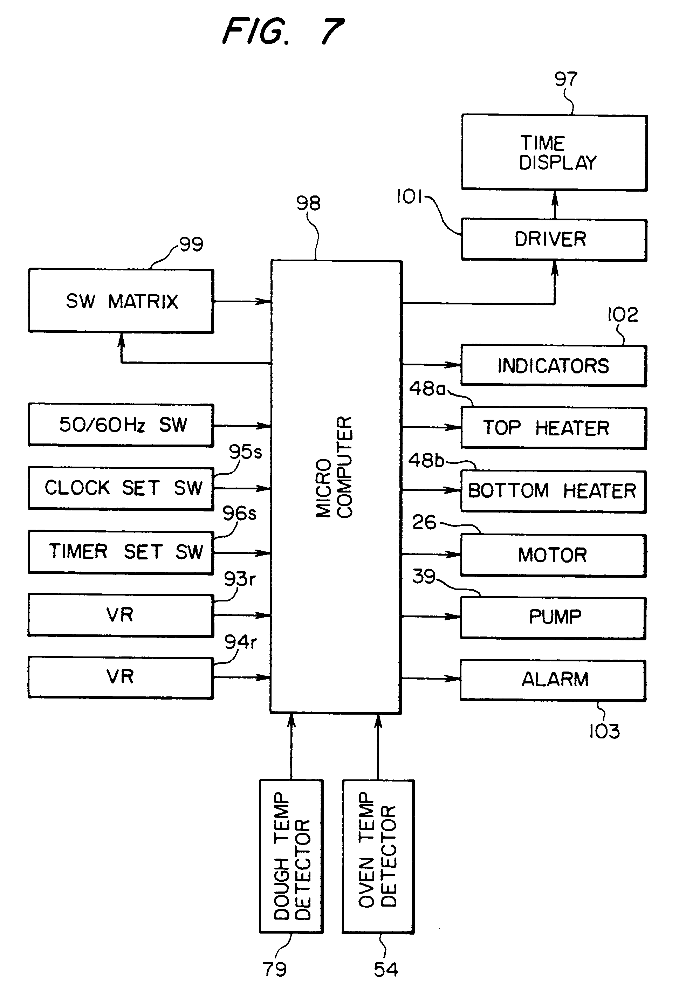

The controller 53 in Fig. 1 is formed by a microcomputer 98, as shown in Fig. 7. The switches which are activated by depressing the keys of the bread setting section 83 and the oven setting section 88, the cancel key 91 and the start key 92 are provided in the form of a switch matrix 99, and when a selected one of the keys are depressed, data indicating the depressed key is input into the microcomputer 98. Switches 95s and 96s which are controlled by the clock setting button 95 and the timer button 96, respectively, are also connected to the microcomputer 98 for input thereto their state of control. When the time setting knob 93 is turned, a variable resistor 93r is adjusted, and when a temperature is set by turning the temperature setting knob 94, a variable resistor 94r is adjusted correspondingly. The resistance values of the variable resistors 93r and 94r thus adjusted are converted into digital form for input into the microcomputer 98. Further, the temperature sensor 54 in the heating chamber 40 in Fig. 1 and the temperature sensor 79 in the fixed rod 19 in Fig. 3 are connected to the microcomputer 98.

The microcomputer 98 provides to a driver 101 data to be displayed on the time display 97 in Fig. 6 and controls the corresponding one of light emitting diodes 102 provided at the positions of the various keys for indicating the output from the microcomputer 98. The top and bottom heaters 48a and 48b, the motor 26 and the pump 39 are also placed under the control of the microcomputer 98. An alarm buzzer 103 is also connected to the microcomputer 98.

The microcomputer 98 has incorporated therein a timing program and performs the same operation as a clock using an ordinary microcomputer, and its clock setting operation is also the same as usual. A brief description will be given of this. Depressing the clock setting button 95 once, an AM or PM display and an hour display 97h are turned ON and OFF and, in this state, the time setting knob 93 is turned to the right or left depending on whether to put the clock forward or back, by which the hour display 97h undergoes sequential changes correspondingly. Depressing again the clock setting button 95 when the hour display has reached the time desired to set, a minute display 97m of the time display 97 is turned ON and OFF. In this state the time setting knob 93 is turned to set the minute display and then the clock setting button 95 again, by which the ON-OFF display of the minute display 97m is stopped. The clock operates on the time thus set and the time is displayed on the time display 97.

Next, a description will be given of the automatic bread baking process.

At first, the rotary vane 19 and the fixed rod 49 are set in the container 16 taken out of the housing 11 and then the ingredients of bread, that is, in the case of baking a pound of plain bread, 300 gr of wheat flour, 4.8 gr of salt, 9 gr of butter, 6 gr of skim milk (powdered milk), 15 gr of sugar and 4.8 gr of instant dry yeast, are put in the container 16 and then the lid 21 is put thereon. Water (200 gr in the case of a pound of plain bread) is poured into the water tank 31; if necessary, cold water is used, or ice is put in the ice box 46. The container 16 is set in the housing 11 and the temperature sensor 79 is connected via the connector 50 to the controller 53. Then the full automatic key 84 on the control panel 52 is depressed. In consequence, the light emitting diodes at the positions of the full automatic key 84, the plain bread key 86a and the 1.0 pound key 87b are lighted. In the case of baking French or German bread, the corresponding key 86a or 86c is depressed and in the case of changing the amount of bread desired to bake, the 0.1 or 1.5 pound key 87a or 87c is depressed correspondingly.

This is followed by setting of the time desired to complete baking. This setting is effected in the same manner as the aforementioned clock setting, but in this case, the timer button 96 is used in place of the clock setting button 95. At this time, a timer is displayed in the time display 97. Finally the start key 92 is depressed.

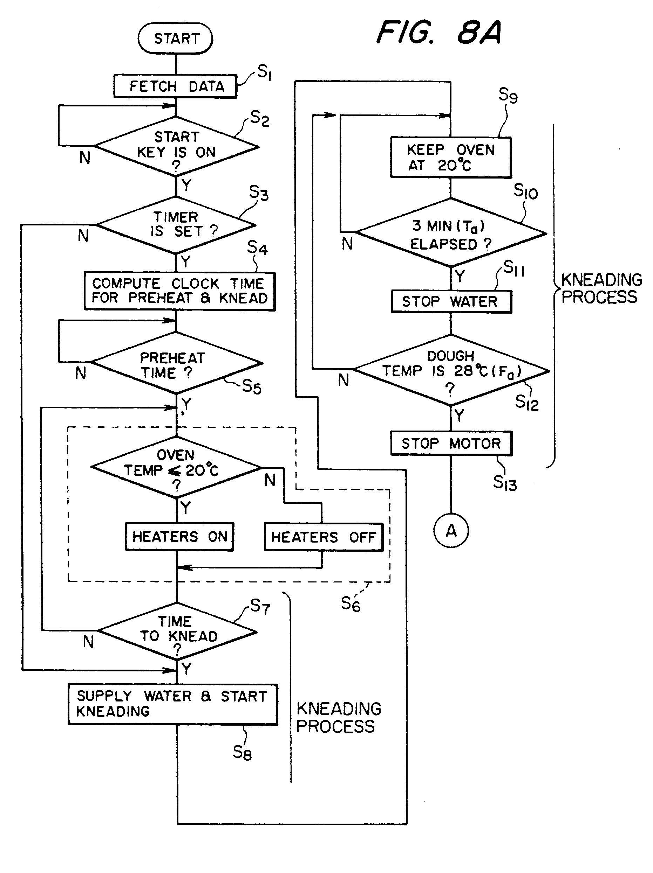

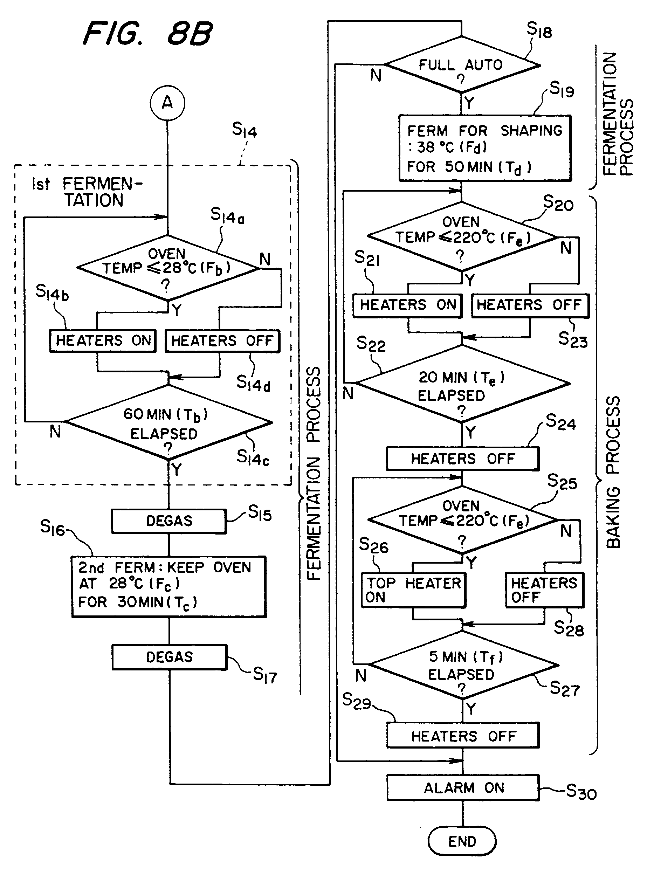

The processing operation by the controller 53 is performed, for example, as shown in flowchart of Figs. 8A and 8B. In step $S_1$ after starting the controller 53, data on the keys depressed on the control panel 52 and the time set by the timer are input into the controller 53 in the order of performance of the operations therefor and are stored in predetermined areas of a RAM in the microcomputer 98. After inputting of these conditions, the controller 53 waits for the depression of the start key 92 in step $S_2$. Upon depression of the start key 92, it is decided in step $S_3$ whether the timer has been set, and if so, preheating and kneading start time points are computed in step $S_4$. The kneading start time point is calculated from a required time $T_0$ which is determined by the kind and the amount of bread and the time desired to complete the baking of the bread, entered from the control panel 52, and the time an hour previous to the kneading start time is calculated to obtain the preheating start time. For example, in the case where the plain bread key 86a and the 1.0 pound key 87b have been depressed, the time three hours and ten minutes (the required time $T_0$) previous to the time desired to finish the baking is the kneading start time and the time an hour previous thereto is the preheating start time.

In step $S_5$ it is decided whether the time of the incorporated clock has reached the calculated preheating start time, and if so, the process proceeds to step $S_6$, in which the interior of the heating chamber 40 is held at a constant temperature, for instance, 20°C. It is decided, on the basis of the output from the temperature sensor 54 in the heating chamber 40, whether the temperature therein is below 20°C, and if so, the heater 48 (the both heaters 48a and 48b) is turned ON. In step $S_7$ it is checked whether the aforesaid calculated kneading start time has come or not, and if not, the process returns to step $S_6$, in which it is decided whether the temperature in the heating chamber 40 is under 20°C or not. If not, the heater 48 is turned OFF and the process proceeds to step $S_7$. In this way, when the preheating start time comes, the operation for holding the temperature in the heating chamber 40 at the predetermined value is carried out.

When it is decided in step $S_7$ that the kneading start time has come, the process proceeds to step $S_8$, starting the kneading operation. At first, the motor 26 is driven and the pump 39 is also driven to supply the water 30 from the water tank 31 to the container 16. Accordingly, the ingredients of bread in the container 16 are kneaded. In step $S_9$ a process for retaining the temperature in the heating chamber 40 at a predetermined value as in step $S_6$ is carried out, and in step $S_{10}$ it is checked by, for example, the incorporated timer, whether the kneading has taken place for a predetermined time Ta, for instance, three minutes. If not, the process goes back to step $S_9$, and if three minutes have elapsed, the driving of the pump 39 is stopped in step $S_{11}$. In step $S_{12}$ it is checked by referring to the detected output of the temperature sensor 79 in the fixed rod 49 whether the temperature of the dough 81 has reached a predetermined value Fa, for example, 28°C. If not, the process returns to step $S_9$, and if yes, the rotation of the motor 26 is stopped in step $S_{13}$, completing the kneading operation, which is followed by the fermentation step.

The fermentation process starts with primary fermentation of the dough 81 in step $S_{14}$. In step $S_{14a}$ it is checked whether the temperature in the heating chamber 40 is held at a predetermined value Fb, that is, below 28°C in the case of baking a pound of plain bread. If the temperature is lower than 28°C, then the heater 48 is turned ON in step $S_{14b}$ and the process proceeds to step $S_{14c}$. When the temperature is decided higher than 28°C, the heater 48 is turned OFF in step $S_{14d}$ and the process proceeds to step $S_{14c}$. In step $S_{14c}$ it is checked whether a predetermined time Tb or sixty minutes in the abovesaid case have passed after the start of the primary fermentation process, and if not, the process goes back to step $S_{14a}$. When sixty minutes have elapsed, the primary fermentation is completed and the process proceeds to step $S_{15}$, in which the motor 26 is driven for a short period of time $t_b$ (eight seconds in the abovesaid example), degassing the dough 81 swollen by fermentation. Next, in step $S_{16}$ the interior of the heating chamber 40 is maintained at a predetermined temperature Fc (28°C in the above example) for a predetermined period of time (30 minutes in the above example), thereby effecting secondary fermentation. The temperature control for the secondary fermentation is carried out in the same manner as in the case of the primary fermentation. Upon completion of the secondary fermentation, the motor 26 is driven for a predetermined period of time $t_c$ (eight seconds in the above example) in step $S_{17}$, degassing the dough 81.

Following this, the process proceeds to step $S_{18}$ and it is checked whether the full automatic key 84 was depressed in step $S_1$. In the case of the full automatic mode of operation, the heating chamber 40 is held at a predetermined temperature Fd (38°C in the above example) for a predetermined period of time Td (50 minutes in the above example) in step $S_{19}$, performing fermentation of the dough 81 for the shaping thereof. The fermentation step terminates with the fermentation for shaping and is followed by the baking step.

The baking operation starts with step $S_{20}$ in which it is checked whether the temperature in the heating chamber 40 is lower than a predetermined value Fe (220°C in the above example) or not. If yes, the top and bottom heaters 48a and 48b are turned ON in step $S_{21}$. If it is decided in step $S_{20}$ that the temperature in the heating chamber 40 is higher than 220°C, then the heaters 48a and 48b are turned OFF in step $S_{23}$, which is followed by step $S_{22}$. In step $S_{22}$ it is checked whether a predetermined period of time Te (20 minutes in the above example) has passed after the start of the baking process. If not, the process returns to step $S_{20}$, and if yes, the process proceeds to step $S_{24}$, turning OFF the heaters 48a and 48b. In the next step $S_{25}$ it is decided whether the temperature in the heating chamber 40 is higher than 220°C or not. When the temperature is below 220°C, the process proceeds to step $S_{26}$, in which the bottom heater 48b alone is turned ON, and the process proceeds to step $S_{27}$. In the case where it is decided that the temperature is above 220°C, the bottom heater 48b is turned OFF, and then the process proceeds to step $S_{27}$. In step $S_{27}$ it is checked whether a predetermined period of time Tf (five minutes in the above example) has passed after completion of step $S_{22}$. If five minutes have not passed yet, the process goes back to step $S_{25}$. When it is decided in step $S_{27}$ that five minutes have passed after the end of step $S_{22}$, the top and bottom heaters 48a and 48b are turned OFF in step $S_{29}$, and in step $S_{30}$, the buzzer is rung for a predetermined period of time to indicate completion of the baking. The baking operation terminates with step $S_{30}$.

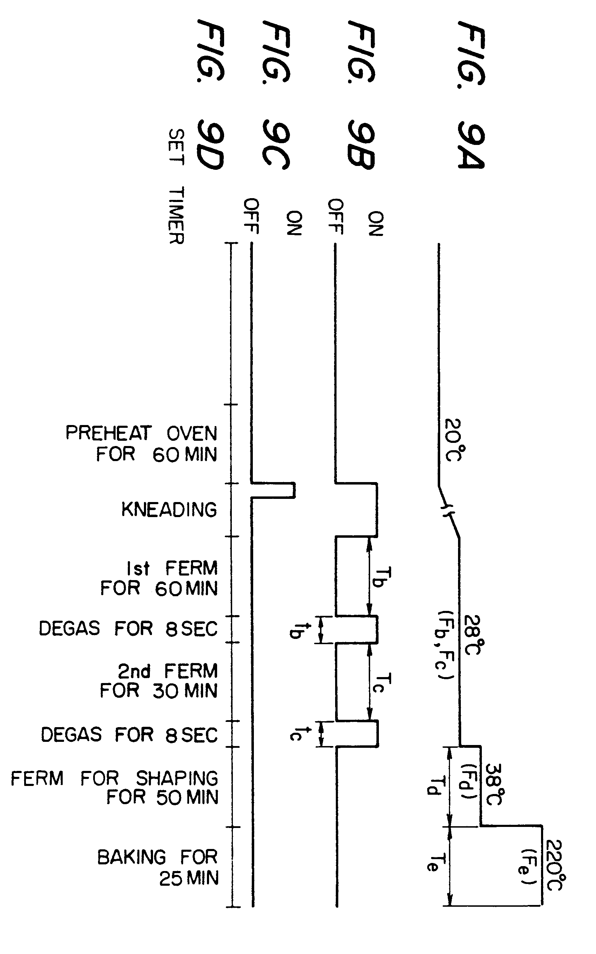

Figs. 9A, B and C are timing charts of the above-described control of the temperature of the heating chamber 40, the motor 26 and the pump 39. In step $S_{15}$ in the fermentation process it is also possible to employ what is called a remix dough method which involves remixing of the dough 81 by driving the motor 26 over a predetermined period of time exceeding the time necessary for degassing the dough 81, for example, five minutes. When it is desired to immediately put the bread baking machine in operation, the time desired to complete baking is not set in the preparatory step. Accordingly, it is decided in step $S_3$ in Fig. 8A that the timer has not been set, and the operation immediately proceeds to step $S_7$ and after the temperature of the heating chamber 40 is controlled to remain at 20°C, the kneading operation starts.

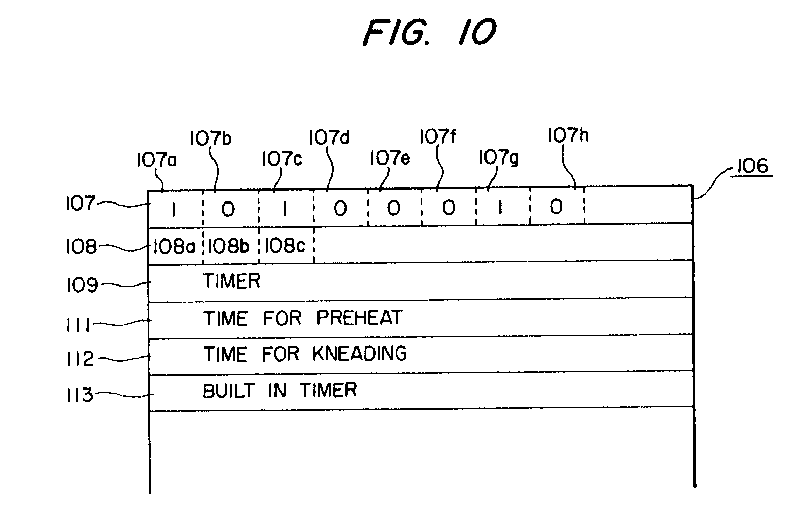

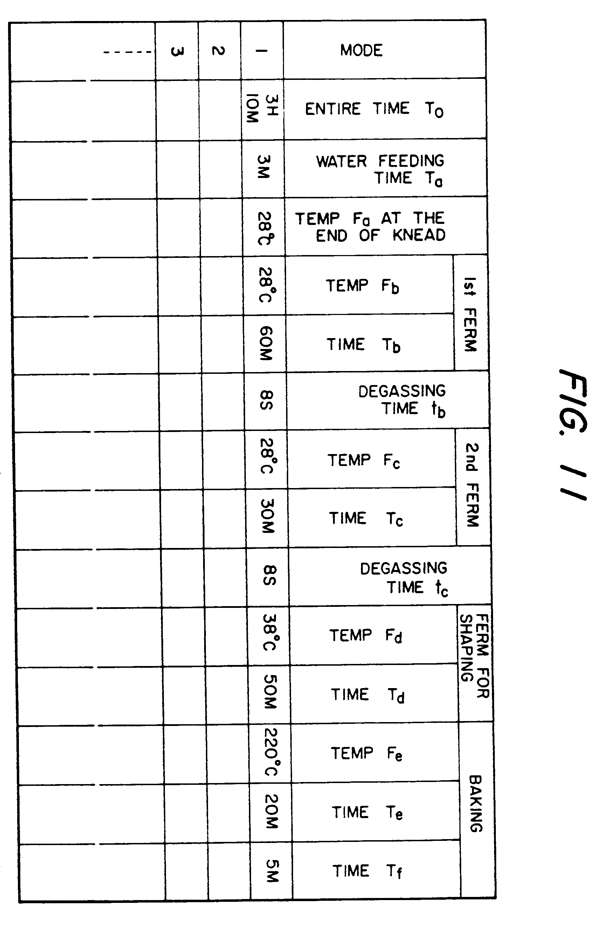

For the abovesaid process control, a bread setting flag area 107 is provided in a RAM 106 of the microcomputer 98 (Fig. 10), and there are stored in the area 107 flags 107a to 107h which respectively correspond to the full automatic key 84, the semi-automatic key 85, the plain bread key 86a, the French bread key 86b, the German bread key 86c, the 0.5 pound key 87a, the 1.0 pound key 87b and the 1.5 pound key 87c and each of which is made a "1" or "0" depending upon whether the corresponding one of the keys is depressed or not. Similarly, flags 108a, 108b and 108c are stored in an area 108 of the RAM 106 corresponding to the top heater key 89a, the top/bottom heater key 89b and the bottom heater key 89c, respectively. The time point (or time) entered by depressing the timer button 96, for example, the baking completion time, is stored in an area 109 of the RAM 106. The preheating start time and the kneading start time computed in step $S_4$ in Fig. 8A are stored in areas 111 and 112 of the RAM 106, respectively. An area 113 of the RAM 106 is used for the incorporated timer which is employed for deciding the lapse of various times. The required time $T_0$, the quantity of water supplied and the temperature and period for each step in the fermentation process differ with the kind and amount of bread desired to bake. Accordingly, their values are prestored, as a table such as shown in Fig. 11, corresponding to the state of the flags 107c to 107h indicating the kinds and amounts of bread. With such an arrangement, in the case of baking a pound of plain bread, the flags 107c and 107g are 1s and the contents of state 1 are read out for controlling the entire bread baking operation.

When the ambient temperature is high as in summer, the kneading process may sometimes be carried out in the following manner. For example, the dough is kneaded unconditionally for first 15 minutes, and if the dough temperature is above 28°C after 15 minutes, the dough is no longer kneaded. If the dough temperature is below 28°C, the dough is further kneaded until its temperature rises up to 28°C. Alternatively, if the dough temperature reaches 28°C within 15 minutes after the start of kneading, then the dough is kneaded until the dough temperature rises to 32°C. In the case where the lowest dough temperature during five minutes after the start of kneading is 21°C or above, the kneading is finished at the moment when the dough temperature has exceeded the abovesaid lowest value plus 8°C. The dough is cooled by the cold water 30 supplied to the container 16 simultaneously with the start of kneading and the dough temperature is reduced down to a minimum value in one to two minutes.

In the operation shown in Figs. 8A and 8B, if the semi-automatic key 85 is depressed, the operation proceeds from step $S_{18}$ to step $S_{29}$. Consequently, the operation terminates with degassing after the secondary fermentation. In the case of using the baking machine only for performing the fermentation, dough is placed in the container 16, any one of the top, top/bottom and bottom heater keys is depressed, the timer button 96 is depressed to set the fermentation time by the time setting knob 93 and the temperature knob 94 is turned to set a desired temperature. Thereafter, the start key 92 is depressed.

As described above, according to the present invention, the kneading, fermentation and baking of dough can be performed under control of the controller. In this instance, the temperature sensor is provided in the neighborhood of a portion against which the dough being kneaded by the rotary vane is pressed, and when the temperature sensor detects that the dough temperature has reached about 28°C, the kneading operation is discontinued. Accordingly, lustrous dough containing gluten can be obtained, and hence good quality bread can be baked. Furthermore, in the case of presetting the time when the bread is desired to be baked, the time when to start the kneading operation accordingly can be obtained by backward calculation. This allows much ease in calculating the time for starting the kneading process when presetting the bread baking machine for baking the bread the next morning, for example.

## Claims

1. Automatic Bread baking machine for domestic use including kneading means, in which ingredients of bread put in a container (16) are kneaded into dough by a rotary vane (19) disposed in the container and the dough is then fermented and baked therein, a controller (53) being provided for controlling the kneading, fermentation and baking of the dough, characterized in that

   the controller (53) includes means (93, 96) for setting the finish time when bread is desired to be finished, means (86a, 86b, 86c or 87a, 87b, 87c) for setting the type and/or the quantity of bread to be baked, means (98) for calculating the time for starting the kneading of the ingredients of bread backward in accordance with the preset finish time and with said preset type and/or quantity of bread, and means (98) for starting the kneading accordingly.

2. The bread baking machine of claim 1, wherein a temperature sensor (79) capable of sensing a temperature of around 28°C is disposed in the vicinity of a portion against which the dough being kneaded by the rotary vane is urged.

3. The bread baking machine of claim 2, wherein the temperature sensor (79) is disposed in a fixed rod which is attached to a side wall of the container (16) and extends therefrom above a circle of rotation of the rotary vane in a radial direction thereof.

## Patentansprüche

1. Automatische Brotbackmaschine für den häuslichen Gebrauch mit einer Knetvorrichtung, bei der die in einen Behälter (16) gegebenen Brotzutaten mittels eines Drehflügels (19), der in dem Behälter angeordnet ist, zu Teig geknetet werden, und der Teig dann darin fermentiert und gebacken wird, wobei eine Steuereinrichtung (53) zum Steuern des Knetens, der Fermentierung und des Backens des Teiges vorgesehen ist,

   dadurch gekennzeichnet, daß

   die Steuereinrichtung (53) eine Anordnung (93, 96) zur Einstellung der Fertigstellungszeit, zu der das Brot fertig sein soll, eine Anordnung (86a, 86b, 86c oder 87a, 87b, 87c) zur Einstellung der Art und/oder der Menge des zu backenden Brots, eine Anordnung (98) zur Berechnung der Zeit für den Beginn des Knetens der Brotzutaten rückwärts nach Maßgabe der voreingestellten Fertigstellungszeit und der voreingstellten Art und/oder Menge des Brots, und eine Anordnung (98) zum entsprechenden Starten des Knetens aufweist.

2. Brotbackmaschine gemäß Anspruch 1, bei der ein zur Ermittlung einer Temperatur von ungefähr 28°C geeigneter Temperatursensor (79) in der Nähe eines Abschnitts, gegen den der geknetete Teig durch den Drehflügel gedrückt wird, angeordnet ist.

3. Brotbackmaschine gemäß Anspuch 2, bei der der Temperatursensor (79) in einer festen Stange angeordnet ist, die an einer Seitenwand des Behälters (16) befestigt ist und sich über dem Drehkreis des Drehflügels in radialer Richtung erstreckt.

**Revendications**

1. Dispositif de cuisson de pain automatique pour usage domestique comprenant un moyen de pétrissage dans lequel les ingrédients du pain mis dans un récipient (16) sont pétris en une pâte par une pale rotative (19) disposée dans le récipient et dans lequel la pâte est fermentée et cuite, un contrôleur (53) étant prévu pour commander le pétrissage, la fermentation et la cuisson de la pâte, caractérisé en ce que
le contrôleur (53) comprend des moyens (93, 96) pour régler l'heure de fin correspondant au moment où le pain doit être fini, des moyens (86a, 86b, 86c ou 87a, 87b, 87c) pour fixer le type et/ou la quantité de pain à cuire, un moyen (98) pour calculer l'heure de démarrage du pétrissage des ingrédients du pain en fonction de l'heure de fin pré-réglée et du type et/ou de la quantité de pain préfixés, et un moyen (98) pour déclencher le pétrissage en conséquence.

2. Dispositif de cuisson de pain selon la revendication 1, dans lequel un capteur de température (79) pouvant détecter une température de 28°C environ est disposé au voisinage d'une portion contre laquelle la pâte étant pétrie par la pale rotative est sollicitée.

3. Dispositif de cuisson de pain selon la revendication 2, dans lequel le capteur de température (79) est disposé dans une tige fixe qui est attachée à une paroi latérale du récipient (16) et s'étend depuis celle-ci au-dessus d'un cercle de rotation de la pale rotative dans une direction radiale de celle-ci.

FIG. 1

# FIG. 2

# FIG. 3

## FIG. 4

## FIG. 5

# FIG. 6

# FIG. 7

EP 0 295 723 B1

# FIG. 8A

START

FETCH DATA — $S_1$

START KEY IS ON ? — $S_2$ — N

TIMER IS SET ? — $S_3$ — N

COMPUTE CLOCK TIME FOR PREHEAT & KNEAD — $S_4$ — Y

PREHEAT TIME ? — N / $S_5$ — Y

OVEN TEMP ≤ 20°C ? — Y / N

HEATERS ON     HEATERS OFF

$S_6$

TIME TO KNEAD ? — $S_7$ — N / Y

SUPPLY WATER & START KNEADING — $S_8$

KNEADING PROCESS

KEEP OVEN AT 20°C — $S_9$

3 MIN ($T_a$) ELAPSED ? — $S_{10}$ — N / Y

STOP WATER — $S_{11}$

DOUGH TEMP IS 28°C ($F_a$) ? — $S_{12}$ — N / Y

STOP MOTOR — $S_{13}$

KNEADING PROCESS

A

16

# FIG. 8B

FIG. 9A

FIG. 9B

FIG. 9C

FIG. 9D

SET TIMER

OFF

ON

OFF

ON

OFF

PREHEAT OVEN
FOR 60 MIN

KNEADING

1st FERM
FOR 60 MIN

DEGAS FOR 8 SEC

2nd FERM
FOR 30 MIN

DEGAS FOR 8 SEC

FERM FOR SHAPING
FOR 50 MIN

BAKING FOR
25 MIN

20°C

28°C
$(F_b, F_c)$

$T_b$

$t_b$

$T_c$

$t_c$

38°C
$(F_d)$

$T_d$

220°C
$(F_e)$

$T_e$

# FIG. 10

| 107a | 107b | 107c | 107d | 107e | 107f | 107g | 107h |
|------|------|------|------|------|------|------|------|

107 — | I | 0 | I | 0 | 0 | 0 | I | 0 | — 106

108 — | 108a | 108b | 108c |

109 — TIMER

III — TIME FOR PREHEAT

112 — TIME FOR KNEADING

113 — BUILT IN TIMER

| MODE | | 1 | 2 | 3 | ----- |
|---|---|---|---|---|---|
| ENTIRE TIME $T_0$ | | 3H 10M | | | |
| WATER FEEDING TIME $T_a$ | | 3M | | | |
| TEMP $F_a$ AT THE END OF KNEAD | | 28°C | | | |
| 1st FERM | TEMP $F_b$ | 28°C | | | |
| | TIME $T_b$ | 60M | | | |
| DEGASSING TIME $t_b$ | | 8S | | | |
| 2nd FERM | TEMP $F_c$ | 28°C | | | |
| | TIME $T_c$ | 30M | | | |
| DEGASSING TIME $t_c$ | | 8S | | | |
| FERM FOR SHAPING | TEMP $F_d$ | 38°C | | | |
| | TIME $T_d$ | 50M | | | |
| BAKING | TEMP $F_e$ | 220°C | | | |
| | TIME $T_e$ | 20M | | | |
| | TIME $T_f$ | 5M | | | |

FIG. 11